# EUROPÄISCHE PATENTSCHRIFT

(11) **EP 3 097 600 B1**
(45) Veröffentlichungstag und Bekanntmachung des Hinweises auf die Patenterteilung: **31.07.2019**
(21) Anmeldenummer: 15700035.7
(22) Anmeldetag: 05.01.2015
(51) Int. Cl.: H01M 10/48, H01M 10/42, H01M 2/12

(54) **BATTERIEZELLE, BATTERIEPACK UND TRANSPORTBEHÄLTER**
BATTERY CELL, BATTERY PACK AND TRANSPORT CONTAINER
ÉLÉMENT DE BATTERIE, BLOC-BATTERIE ET RÉCIPIENT DE TRANSPORT

(30) Priorität: 23.01.2014 DE 102014201162
(43) Veröffentlichungstag der Anmeldung: 30.11.2016
(73) Patentinhaber: Robert Bosch GmbH, 70442 Stuttgart (DE)
(72) Erfinder: FETZER, Joachim, 73342 Bad-Ditzenbach (DE); FINK, Holger, 70567 Stuttgart (DE); HALD, Markus, 73489 Jagstzell (DE); PARTES, Hans, 71679 Asperg (DE)
(86) Internationale Anmeldenummer: PCT/EP2015/050040
(87) Internationale Veröffentlichungsnummer: WO 2015/110275

(56) Entgegenhaltungen:
- DE-A1-102010 046 307
- DE-A1-102012 208 509
- DE-A1-102012 209 397
- JP-A- H 076 795
- US-A1- 2005 223 826
- US-A1- 2007 259 255

## Beschreibung

### Stand der Technik

Die Erfindung betrifft eine Batteriezelle, ein Batteriepack und einen Transportbehälter.

Bei einem Defekt oder bei einer unsachgemäßen Handhabung kann es bei Batteriezellen, insbesondere bei Lithiumionenzellen, zur Gasbildung im Inneren der Batteriezelle kommen. Durch die Gasbildung entsteht ein Überdruck. Es ist bekannt, ein Überdruckventil oder eine Berstmembran in einem Gehäuse der Batteriezelle vorzusehen, um die entstandenen Gase abzuführen und ein thermisches Durchgehen der Batteriezelle zu vermeiden.

DE 199 36 063 A1 zeigt eine elektrochemische Sekundärzelle, die Elektroden und ein Elektrolytsystem in einem diese umschließenden Gehäuse aufweist. Am Gehäuse ist eine Detektoreinrichtung angebracht, mit der eine Formänderung des Gehäuses detektiert werden kann, die sich beispielsweise durch eine Gasentwicklung in der Batteriezelle ergibt. Als Detektororgan ist ein Piezoelement beschrieben.

DE 10 2008 053 011 A1 zeigt eine galvanische Batteriezelle für einen Akkumulator, bei der eine Sensoreinrichtung vorgesehen ist, mit der ein unerwünschter Zustand der galvanischen Batteriezelle detektiert werden kann. Als geeignete Sensoreinrichtungen sind zum Beispiel Temperaturmesseinrichtungen, Piezoelemente, Dehnmessstreifen oder andere Messeinrichtungen genannt. Diese sollen insbesondere dazu dienen, Verformungen des Gehäuses zu detektieren, wenn beispielsweise in der Batteriezelle eine Gasbildung, und damit eine Druckerhöhung, auftritt.

DE 10 2011 112 641 A1 zeigt ein Verfahren zum Prüfen einer Lithiumionenbatteriezelle auf Funktionsfähigkeit, bei dem auf bestimmte Stellen des Gehäuses geschlagen wird, wodurch Schall entsteht. Dieser wird mit einem außerhalb der Batteriezelle angeordneten Mikrofon empfangen. Aus dem empfangenen Signal wird auf den Zustand der Batteriezelle geschlossen.

US 2007/122691 A1 zeigt eine flache Batteriezelle, welche mit einem piezoelektrischen Element in einem gemeinsamen Rahmen angeordnet ist. Das piezoelektrische Element detektiert Schwellungen der Batteriezelle aufgrund abnormaler Operation oder Verschlechterung der Batteriezelle.

EP 2 549 580 A1 zeigt ein Batteriesystem mit einer Vielzahl von Batteriezellen und einem Batteriemanagementsystem zur Steuerung und Überwachung der Batteriezellen. In einem gemeinsamen Gehäuse ist zudem ein piezoelektrisches Element angeordnet, welches zur Detektion eines Abstands der Batteriezellen zum Gehäuse eingesetzt wird.

DE 10 2012 209397 A1 zeigt eine Batteriezelle mit einem in einem Zellgehäuse angeordneten Elektrodenwickel. Der Elektrodenwickel ist bereichsweise von einem drucksensitiven Foliensensor bedeckt.

US 2005 0223826 A1 zeigt ein Überwachungssystem mit einem integrierten elektrischen Kreis, einer Batterie und einer piezoelektrischen Folie.

US 2007/259255 A1 zeigt eine Sekundärzelle mit einem piezoelektrischen Berststreifen.

JP H07 6795 A zeigt einen Detektor für Geräusche, die innerhalb einer Batteriezelle erzeugt werden.

DE 10 2010 046307 A1 zeigt eine elektrochemische Zelle eines Akkumulators. Dabei ist ein Sensorelement als elektrisch leitende schichtförmige Leiterbahnstruktur auf einer Oberfläche eines dielektrische, in Form einer dünnen Folie ausgebildeten Laminats ausgebildet.

DE 10 2012 208 509 A1 zeigt eine Vorrichtung zum Ermitteln einer Zustandsgröße einer Zelle. Die Vorrichtung umfasst einen ersten Kraftsensor, einen zweiten Kraftsensor und einen Gasdrucksensor, die jeweils als Foliensensoren ausgebildet sind.

### Offenbarung der Erfindung

Die erfindungsgemäße Batteriezelle weist zumindest einen piezoelektrischen Foliensensor auf, d. h. einen Sensor, welcher als eine piezoelektrische Folie in der Batteriezelle derart ausgebildet ist, wie im gegenwärtigem unabhängigem Anspruch 1 definiert wird.

Der als piezoelektrische Folie ausgebildete Sensor wird im Rahmen der vorliegenden Anmeldung abkürzend auch als Sensor bezeichnet. Der piezoelektrische Foliensensor eignet sich zur Bestimmung von dynamischen Kräften, als Drucksensor und als Mikrofon unter Ausnutzung des piezoelektrischen Effekts. Als piezoelektrischer Effekt wird dabei der piezoelektrische Effekt in direkter oder in inverser Form verstanden. Der direkte piezoelektrische Effekt bezeichnet das Auftreten einer elektrischen Spannung an Festkörpern, wenn diese elastisch verformt werden. Der inverse piezoelektrische Effekt bezeichnet die Verformung von Festkörpern bei Anlegen einer elektrischen Spannung.

Vorteilhafte Weiterbildungen und Verbesserungen des im unabhängigen Anspruch angegebenen Gegenstands sind durch die in den abhängigen Ansprüchen 2-11 aufgeführten Maßnahmen möglich.

Bevorzugt weist die piezoelektrische Folie eine Dicke zwischen 10 µm und 500 µm, besonders bevorzugt zwischen 10 µm und 100 µm auf. Die Folie kann daher als Sensor an geeigneten Stellen aufgeklebt werden.

Nach einer Ausführungsform ist die piezoelektrische Folie aus Polyvinylidenfluorid (PVDF) gefertigt. PVDF weist eine gute thermische und chemische Beständigkeit auf und zeichnet sich zudem durch einen starken piezoelektrischen Effekt auf. Alternativ können als Materialien Triglycinsulfat (TGS), Triglycinsulfat in deuterierter Form (DTGS), Triglycinsulfat mit L-Alanin dotiert (LATGS, DLaTGS), Lithiumtantalat, Strontiumbariumniobat (SrBaNb03), Bleititanat (PbTi03), Bariumtitanat (BaTiO3) im ferroelektrischen Zustand, d. h. unterhalb der ferroelektrischen Curie-Temperatur, Natriumnitrit (NaNO2), Lithiumniobat (LiNb03), oder Mischungen daraus verwendet werden.

Nach einer Ausführungsform ist eine weitere piezoelektrische Folie an einer Seitenfläche eines Gehäuses der Batteriezelle, im Folgenden auch als Zellgehäuse bezeichnet, angeordnet. Hierbei eignet sich der piezoelektrische Foliensensor besonders gut zur Detektion von Schwingungen des Zellgehäuses, welche durch deren Verformung entstehen. Durch die vorteilhafte geringe Materialdicke und Masse der piezoelektrischen Folie kann der Sensor an den Seitenflächen des Zellgehäuses befestigt werden, ohne dass zusätzlicher Platz benötigt wird und die Funktion oder das Verhalten der Batteriezelle merklich beeinflusst werden.

Durch die geringe Masse des Sensors wird außerdem das Schwingverhalten des Zellgehäuses nicht wesentlich beeinflusst.

Besonders bevorzugt wird in einer Weiterbildung ein weiterer als piezoelektrische Folie ausgebildete Sensor im Zentrum der Seitenfläche des Zellgehäuses angebracht, da hier die größte Ausdehnung im Falle der Verformung und auch die größten Schwingungsamplituden zu erwarten sind.

Wenn das Zellgehäuse verformt wird, kann dies aufgrund der sehr hohen Empfindlichkeit des Sensors detektiert werden. Auch der Grund für die Zellgehäuseverformung oder Schwingung kann mittels Sensor festgestellt werden, da jede Ursache eine spezifische Schwingung an der Oberfläche des Zellgehäuses bewirkt und auch die Eigenschwingung des Zellgehäuses verändert. Bei einem Druckanstieg im Inneren der Batteriezelle wölbt sich beispielsweise das gesamte Gehäuse nach außen. Bei einem Aufquellen der Batteriezelle drückt ein Zellwickel oder ein Stapel gegen die Seitenflächen der Batteriezelle und verformt diese nach außen. Als Zellwickel und Stapel wird dabei eine Anordnung mehrerer Kathodenlagen und Anodenlagen mit zwischenliegenden Separatoren verstanden, wobei zwischen Zellwickel und Stapel in bekannter Weise geometrisch und/oder herstellungstechnisch unterschieden wird. Eine von außen zugeführte Beschädigung der Batteriezelle dellt dagegen das Gehäuse lokal ein.

Aus der Detektion der Schwingung des Zellgehäuses bei dessen Verformung kann auf das auslösende Ereignis, beispielsweise auf den Druckanstieg in der Batteriezelle bei einem beginnenden Entgasungsvorgang, das Aufquellen des Zellwickels oder des Stapels oder eine Beschädigung der Batteriezellen von außen, beispielsweise durch eine Kollision, geschlossen werden, und es können entsprechende Schutzmaßnahmen eingeleitet werden, zum Beispiel das Abschalten der Batteriezelle.

Nach einer Ausführungsform ist eine weitere piezoelektrische Folie an einer Berstmembran eines Gehäuses der Batteriezelle angeordnet. Durch seine sehr geringe Materialdicke, beispielsweise ca. 10 µm, und Masse kann der Sensor an der Berstmembran befestigt werden, ohne dass deren Funktion und Verhalten merklich beeinflusst werden. Die Berstmembran dämpft aufgrund ihrer geringen Materialdicke das Signal im Vergleich zum restlichen Gehäuse am geringsten.

Der an der Berstmembran angeordnete Sensor eignet sich besonders zur Detektion von Geräuschen, welche im Inneren der Batteriezelle, beispielsweise bei der Bildung von Gasblasen oder durch interne Kurzschlüsse, entstehen. Bei einer Gasbildung innerhalb der Batteriezelle, beispielsweise durch Überladung, entstehen Geräusche sowohl bei der Entstehung der Gasblasen durch die chemischen Reaktionen als auch danach, wenn zumindest ein Teil der Blasen aufgrund ihrer geringen Stabilität wieder kollabiert. Beim Aufsteigen bilden die Gasblasen mit dem umgebenden Elektrolyten ein Schwingsystem, was zu einer weiteren Geräuschentwicklung führt. Bei einem vertikalen Verbau der Batteriezellen erreichen die Gasblasen nach dem Aufstieg den Zelldeckel, sammeln sich dort, platzen und bilden neue, größere Gasblasen, was ebenso zu detektierbaren Geräuschen führt. Weitere Geräusche entstehen beim Aufquellen der Batteriezellen u.a. durch die Bewegungen der Folienlagen in den Zellwickeln oder Stapeln. Weitere Geräusche entstehen durch interne Kurzschlüsse innerhalb der Zellwickel oder Stapel, zum Beispiel durch Verunreinigung. Dabei bilden sich mikroskopisch kleine Lichtbögen, welche zu einem knisterartigen Geräusch führen.

Die entstehenden Schallwellen breiten sich in der gesamten Batteriezelle aus und versetzen alle Gehäuseteile in eine Schwingung, wobei die Berstmembran aufgrund ihrer geringen Materialdicke am stärksten schwingt.

Erfindungsgemäß bildet die piezoelektrische Folie eine Trägerschicht einer Elektrode. Weiter kann eine weitere solche piezoelektrische Folie eine Schicht eines Separators bilden. Mithilfe der piezoelektrischen Trägerschicht als Mikrofon werden die Geräusche des Zellinneren ermittelt. Derartige Geräusche werden insbesondere durch die Bildung von Gasblasen oder durch interne Kurzschlüsse verursacht. Die Sensorleitungen sind über eine abgedichtete Öffnung beispielsweise durch den Zelldeckel aus dem Inneren der Batteriezelle herausgeführt.

Nach einer weiteren Ausführungsform weist die Batteriezelle zumindest zwei als piezoelektrische Folien ausgebildete Sensoren auf, wobei eine weitere piezoelektrische Folie oder die weitere piezoelektrische Folien eine Trägerschicht einer Elektrode oder eine Schicht eines Separators bilden. Eine derartige Batteriezelle ermöglicht insbesondere eine Druckmessung innerhalb der Batteriezelle. Mithilfe der Sensoren kann auf eine beginnende Gasbildung, zum Beispiel durch Überladung oder durch einen technischen Defekt, geschlossen werden. Durch die sehr geringe Materialdicke der piezoelektrischen Folie besitzt diese die hierfür notwendige Verformbarkeit.

Bei der Gasbildung zwischen der Anode und der Kathode, werden die Trägerschichten lokal auseinander gedrückt, die Verformungskräfte durch die piezoelektrischen Folie aufgenommen und in ein elektrisches Signal umgewandelt. Die Sensorleitungen sind über eine abgedichtete Öffnung durch den Zelldeckel hinausgeführt. Die Anschlüsse der beiden Folien werden so verschaltet, dass eine Differenz zwischen den beiden elektrischen Signalen der beiden Folien gebildet wird, sodass sich Signalanteile aufheben, welche durch äußere Einflüsse, beispielsweise Kräfte durch Bremsen oder Anfahren oder Querkräfte bei Kurvenfahrten erzeugt werden, damit diese keinen Einfluss auf die spätere Auswertung haben.

Nach einem weiteren Aspekt der Erfindung umfasst ein Batteriepack eine Batterie, die zumindest eine der zuvor beschriebenen Batteriezellen aufweist. Das Batteriepack umfasst außerdem ein Steuergerät für die Batterie, wobei das Steuergerät eine Auswerteeinheit aufweist, die an die piezoelektrische Folie gekoppelt ist. Die Auswerteeinheit ist eingerichtet, die elektrischen Signale der piezoelektrischen Folie zu empfangen und zu verarbeiten. Die Auswerteeinheit kann in ein bestehendes Steuergerät integriert sein oder ein separates Bauteil des Batteriepacks bilden.

Zur Verarbeitung des Sensorsignals kann vorgesehen sein, dass die Auswerteeinheit einen Hochpass-Filter aufweist, um störende Signalanteile zu eliminieren, welche aus der Umgebung stammen, beispielsweise aus dem Fahrzeugbetrieb beim Anfahren oder Bremsen. Zur Verarbeitung des Sensorsignals kann die Auswerteeinheit außerdem eine Einheit zur Auswertung des Amplitudenhubs aufweisen, sodass beim Überschreiten einer definierten Grenzspannung eine Gegenmaßnahme ausgelöst werden kann. Alternativ oder zusätzlich kann die Auswerteeinheit weitere Signalverarbeitungseinrichtungen aufweisen, die beispielsweise eine Fourier-Transformation oder eine Wavelet-Transformation durchführen, um das Frequenzspektrum von Schwingungen zu ermitteln, welche durch das detektierte Ereignis erzeugt werden.

Die Auswerteeinheit ist mit einer Reaktionseinheit gekoppelt, welche eingerichtet ist, Reaktionsmaßnahmen und/oder Gegenmaßnahmen auszulösen, wie zum Beispiel das Abschalten der Batteriezelle oder die Entladung der Batteriezelle einzuleiten, Nachrichten auf einem Fahrzeugbus abzusetzen, den Fahrer zu benachrichtigen oder ein Schadensprotokoll zu führen.

Nach einem weiteren Aspekt weist ein Transportbehälter zumindest eine der beschriebenen Batteriezellen oder eines der beschriebenen Batteriepacks auf.

Nach einer bevorzugten Ausführungsform weist der Transportbehälter eine Auswerteeinheit auf, die an die piezoelektrische Folie gekoppelt ist. Vorteilhaft wird durch den als piezoelektrische Folie ausgebildeten Sensor detektiert, wenn ein unsachgemäßer Transport, Produktionsfehler oder Verunreinigungen insbesondere beim Transport von dem Hersteller zum Kunden stattgefunden haben. Hierdurch wird eine Überwachung der Batteriezellen in dem Transportbehälter ermöglicht. Durch den als piezoelektrische Folie ausgebildeten Sensor werden Geräusche im Inneren des Transportbehälters erfasst, insbesondere Geräusche und Schwingungen, welche durch Defekte in den Batteriezellen erzeugt werden. Als piezoelektrische Folie kann der Sensor sehr platzsparend ausgeführt werden, sodass eine wartungsfreundliche Unterbringung des Sensors im Transportbehälter möglich ist. Der Sensor wird beispielsweise mithilfe eines Klebebandes oder über eine Fixierung an einem Zellgehäuse angebracht. Handelt es sich bei dem Frachtgut um mehrere Batteriezellen oder um mehrere Module, dann wird idealerweise an jeder Batteriezelle oder an jedem Modul ein als piezoelektrische Folie ausgebildeter Sensor angebracht.

Die Auswerteeinheit ist beispielsweise im Deckel des Transportbehälters angeordnet. Aufgrund des geringen Energiebedarfs der Auswerteeinheit ist ein autarker Betrieb mittels handelsüblichen Gerätebatterien möglich. Die Auswerteeinheit kann an eine Reaktionseinheit gekoppelt sein, welche beispielsweise akustisch oder optisch Signale an die Umgebung absetzen kann, sobald ein Schadensfall detektiert wurde.

### Kurze Beschreibung der Zeichnungen

Ausführungsbeispiele der Erfindung sind in den Zeichnungen dargestellt und in der nachfolgenden Beschreibung näher erläutert. Es zeigen:
- Figur 1: eine Batteriezelle in perspektivischer Darstellung,
- Figur 2: eine Batteriezelle in seitlicher Schnittansicht,
- Figur 3: einen Ausschnitt aus einer Batteriezelle in seitlicher Schnittansicht und in Schnittansicht von oben,
- Figur 4: einen Ausschnitt einer Schnittansicht durch eine Anordnung mit zwei Elektroden,
- Figur 5: einen weiteren Ausschnitt einer Schnittansicht durch eine Anordnung mit zwei Elektroden und
- Figur 6: eine Schnittansicht durch eine Batteriezelle in einem Transportbehälter.

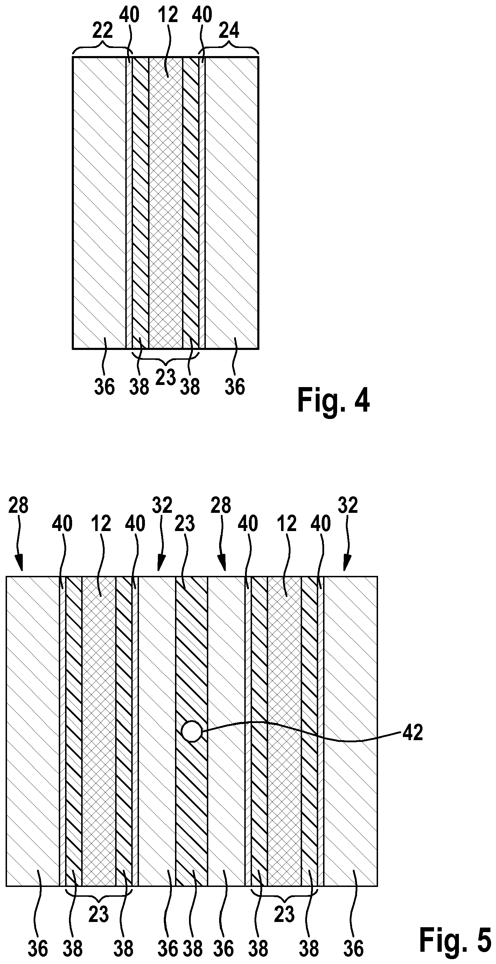

In der nachfolgenden Beschreibung der Ausführungsbeispiele der Erfindung werden gleiche oder ähnliche Komponenten mit gleichen oder ähnlichen Bezugszeichen bezeichnet, wobei in Einzelfällen auf eine wiederholte Beschreibung dieser Komponenten verzichtet wird. Die Figuren stellen verschiedene (bevorzugte) Merkmale der Erfindung nur schematisch dar, wobei Figuren 4 und 5 einige Beispiele der kennzeichnenden Merkmalskombination des Gegenstands der gegenwärtigen Erfindung erläutern.

### Ausführungsformen der Erfindung

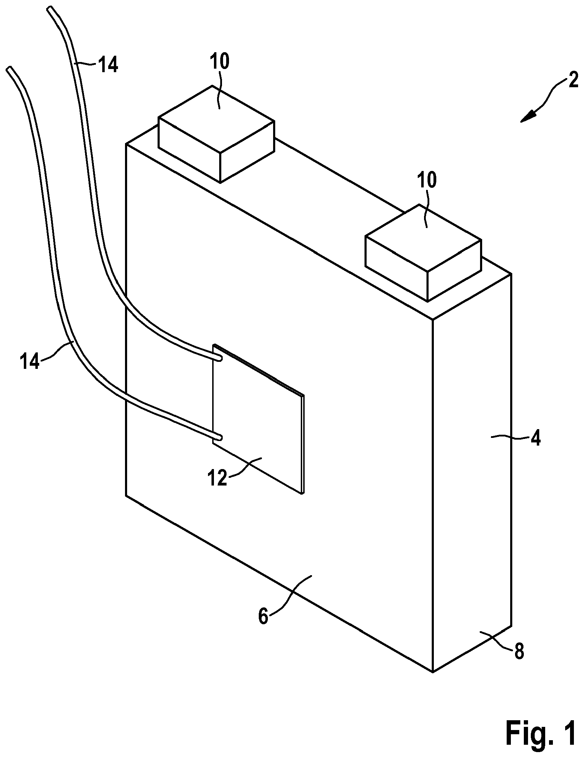

Figur 1 zeigt eine Batteriezelle 2 gemäß einer ersten Ausführungsform der Erfindung. Die Batteriezelle 2 ist beispielsweise eine Lithiumionenzelle mit einem typischen Spannungsbereich von 2,8-4,2 V. Der Begriff "Batterie" wird in der vorliegenden Beschreibung dem üblichen Sprachgebrauch angepasst für Akkumulator verwendet. Eine Batterie umfasst dabei eine oder mehrere Batterieeinheiten, die eine Batteriezelle 2, ein Batteriemodul oder einen Modulstrang bezeichnen können.

Die Batteriezelle 2 weist ein Gehäuse 4 mit einer ersten Seitenfläche 6 und einer zweiten Seitenfläche 8 auf. Das dargestellte Ausführungsbeispiel zeigt eine im Wesentlichen kubische Batteriezelle 2, jedoch ist die Erfindung nicht auf derartige Gehäusegeometrien beschränkt.

An einer Oberseite des Gehäuses 4 sind zwei Terminale 10 angeordnet, welche einen Plus- und einen Minuspol der Batteriezelle 2 bilden. An den Terminalen 10 kann die Batteriezelle 2 mittels Zellverbindern (nicht dargestellt) mit weiteren Batteriezellen 2 schaltungstechnisch verbunden werden, beispielsweise seriell oder parallel zu Modulen verschaltet werden. Mehrere Module können einen Batteriedirektkonverter (BDC, *battery direct converter*) bilden und mehrere Batteriedirektkonverter einen Batteriedirektinverter (BDI, *battery direct inverter*)*.*

Die Batteriezelle 2 weist an ihrer ersten Seitenfläche 6 einen Sensor 12 auf, welcher als eine piezoelektrische Folie ausgebildet ist. Die piezoelektrische Folie weist eine Dicke zwischen 10 und 100 µm auf und enthält beispielsweise Polyvinylidenfluorid (PVDF). Der Sensor 12 ist mittels elektrischer Leitungen 14 kontaktiert.

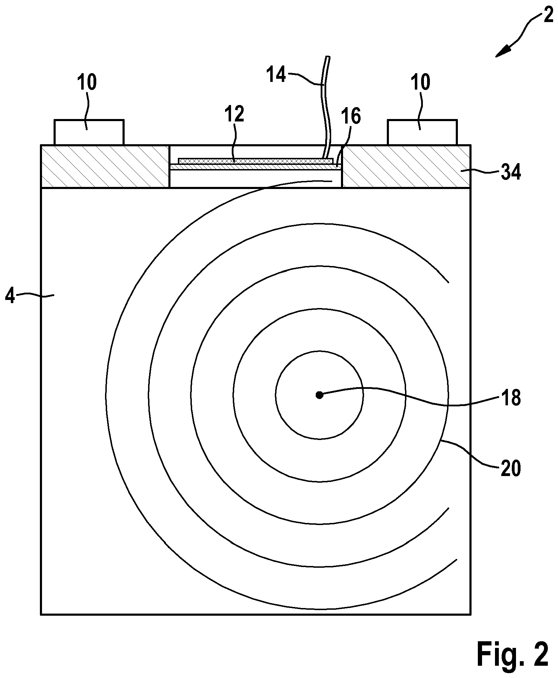

Figur 2 zeigt eine erfindungsgemäße Batteriezelle 2 nach einer weiteren Ausführungsform. Der Sensor 12 ist bei dieser Ausführungsform im Bereich eines Gehäusedeckels 34 des Gehäuses 4 angeordnet, nämlich zwischen den Terminalen 10. Der Sensor 12 ist dabei auf eine Berstmembran 16 angebracht, beispielsweise durch Aufkleben. Die Berstmembran 16 eignet sich besonders gut als Sensorträger, da sie zweckentsprechend sehr dünn ausgeführt wird, beispielsweise 200 bis 300 µm. Die elektrische Kontaktierung des Sensors 12 erfolgt über die elektrische Leitung 14 außenseitig der Batteriezelle 2.

Weiterhin ist ein auslösendes Ereignis 18 dargestellt, welches hier beispielhaft punktuell lokalisiert ist. Das auslösende Ereignis 18 kann beispielsweise eine Gasbildung innerhalb der Batteriezelle 2 sein, welche durch eine Überladung entstanden ist. Bei der Gasbildung entstehen Geräusche, welche als Schallwelle 20 dargestellt sind. Die Geräusche entstehen sowohl bei der Entstehung der Gasblasen durch die chemischen Reaktionen als auch danach, wenn zumindest wieder ein Teil der Blasen aufgrund ihrer geringen Stabilität kollabiert. Die Blasen erreichen aufgrund des überwiegend stehenden Einbaus der Batteriezellen 2 nach dem Aufstieg den Gehäusedeckel 34, sammeln sich dort, platzen und bilden neuere, größere Gasblasen, was ebenfalls zu Geräuschen führt (nicht dargestellt). Ein auslösendes Ereignis 18 kann außerdem durch Aufquellen der Batteriezelle 2 entstehen oder durch interne Kurzschlüsse innerhalb der Batteriezelle 2, beispielsweise durch Verunreinigungen.

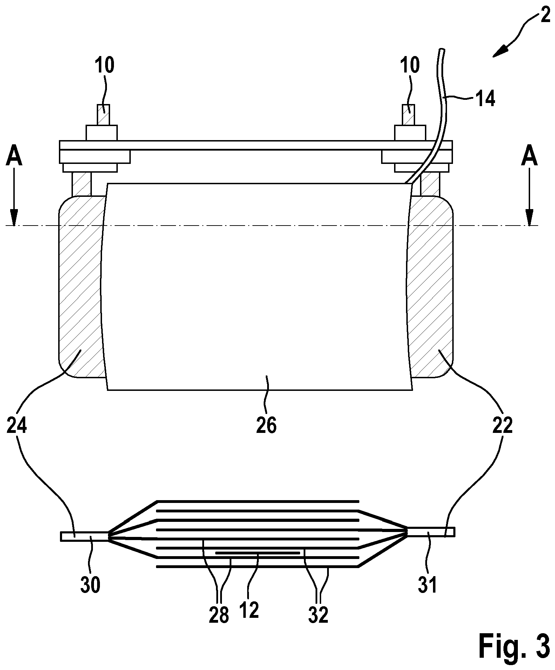

Figur 3 zeigt im oberen Bereich Teile einer Batteriezelle 2 in seitlicher Draufsicht. Im unteren Bereich der Figur 3 ist außerdem eine Schnittansicht der im oberen Bereich der Figur 3 dargestellten Teile der Batteriezelle 2 entlang einer Linie A-A dargestellt.

Die Batteriezelle 2 weist eine Anode 22 und eine Kathode 24 auf, welche gemeinsam auch als Elektroden 22, 24 bezeichnet werden. Das dargestellte Ausführungsbeispiel zeigt eine Batteriezelle 2, deren Kathode 24 eine Vielzahl von Kathodenlagen 28 aufweist, die an einem Stromkollektor 30 zusammengeführt sind. Ebenso weist die Anode 22 eine Vielzahl von Anodenlagen 32 auf, die an einem weiteren Stromkollektor 31 zusammengeführt sind. Die Kathodenlagen 28 und die Anodenlagen 32, welche gemeinsam auch als Lagen 28, 32 bezeichnet werden, sind zu einem Stapel 26 abwechselnd übereinander geschichtet. Zwischen den Kathodenlagen 28 und den Anodenlagen 32 sind üblicherweise Separatoren 23 oder Separatorlagen angeordnet, welche hier nicht mit dargestellt sind. Der Sensor 12 ist zwischen einer Anodenlage 32 und einer Kathodenlage 28 angeordnet, um Geräusche im Zellinneren zu detektieren. Die elektrische Leitung 14 wird zwischen den Lagen 28, 32 herausgeführt.

Figur 4 zeigt einen Ausschnitt eines Schnittes durch eine Anordnung mit einer Anode 22, einem Separator 23 und einer Kathode 24, wobei die Anode 22 und die Kathode 24 beispielsweise die Elektroden 22, 24 einer Lithiumionenzelle sind.

Die Anode 22 umfasst eine Metallschicht 40, die beispielsweise Kupfer enthält, und Elektrodenmaterial 36, welches beispielsweise Silicium (Si), Germanium (Ge), Lithium, ein kohlenstoffhaltiges Material, wie Graphit oder amorphe Kohlenstoffe, oder eine metallische Legierung enthält. Auch beliebige Mischungen der genannten Elektrodenmaterialien 36 sind möglich.

Die Kathode 24 umfasst eine weitere Metallschicht 40, die beispielsweise Aluminium enthält, und weiteres Elektrodenmaterial 36, welches beispielsweise Lithium-Kobaltdioxid (LiCO₂) Lithium-Eisenphosphat (LiFePO4), Lithium-Mangan-Oxid (LMO), Lithium-Manganspinelle, Lithium-Manganoxidspinell (LiMn₂O₄), Nickel umfassende Mischoxide, Nickel/Mangan/Kobalt/Aluminium-Mischoxide, Lithium-Nickel-Kobalt-Aluminium-Oxide (NCA), Lithium-Nickel-Mangan-Kobalt-Mischoxide (NCM) oder auch Lithium-Metall-Phosphate enthält. Auch beliebige Mischungen der genannten Elektrodenmaterialien 36 sind möglich.

Zwischen der Anode 22 und der Kathode 24 ist der als piezoelektrische Folie ausgebildete Sensor 12 angeordnet. Beidseitig des Sensors 12 sind Kunststoffschichten 38 angeordnet. Die piezoelektrische Folie bildet dabei eine Trägerschicht, welche je nach Herstellungsverfahren der Anode 22 oder der Kathode 24 zugeordnet ist. Der Sensor 12 und die Kunststoffschichten 38 bilden den Separator 23 mit der Eigenschaft der lonenleitung. Je nach Herstellungsverfahren können die Kunststoffschichten 38 mit den Metallschichten 40 beschichtet sein.

Wie mit Bezug zu Figur 3 beschrieben, umfasst der dort dargestellte Stapel 26 eine Vielzahl von Anodenlagen 32 und Kathodenlagen 28, welche durch Separatoren 23 voneinander getrennt sind. Figur 5 zeigt beispielhaft eine derartige Anordnung mit einer Schichtfolge von einer Kathodenlage 28, einer Anodenlage 32, einer weiteren Kathodenlage 28 und einer weiteren Anodenlage 32, wobei die Lagen 28, 32 mittels Separatoren 23 voneinander getrennt sind. Einige oder alle der Separatoren 23 können wie mit Bezug zu Figur 4 beschrieben ausgebildet sein und die als piezoelektrische Folie ausgebildeten Sensoren 12 aufweisen. In bevorzugten Ausführungsformen weisen, wie dargestellt, zwei der Separatoren 23 die als piezoelektrische Folie ausgebildeten Sensoren 12 auf.

Ein Bereich 42 deutet Gasbildung zwischen einer der Anodenlagen 32 und einer der Kathodenlagen 28 an. Durch die Gasbildung werden die Lagen 28, 32 lokal auseinander gedrückt und die Verformungskräfte durch die Sensoren 12 aufgenommen und in ein elektrisches Signal umgewandelt. Die beiden Sensoren 12 werden elektrisch so verschaltet, dass eine Differenz zwischen den beiden elektrischen Signalen der Sensoren 12 gebildet wird. Hierdurch heben sich Signalanteile auf, welche durch äußere Einflüsse erzeugt werden, zum Beispiel Kräfte durch das Bremsen oder Anfahren oder Querkräfte bei Kurvenfahrten, was die spätere Auswertung erleichtert.

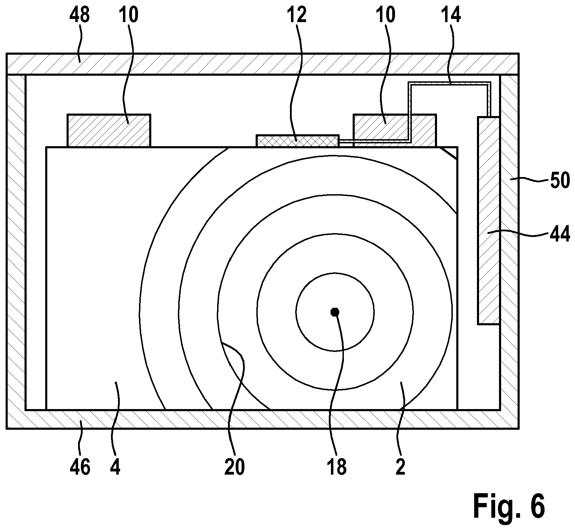

Figur 6 zeigt eine Batteriezelle 2, welche in einem Transportbehälter 46 angeordnet ist. Die Batteriezelle 2 ist durch Öffnen eines Transportbehälterdeckels 48 zugänglich. Der als piezoelektrische Folie ausgebildete Sensor 12 ist auf einem Gehäuse 4 der Batteriezelle 2 angeordnet und erfasst Geräusche im Inneren des Transportbehälters 46. Schematisch sind wiederum das auslösende Ereignis 18 und die Schallwelle 20 dargestellt, welche vom Sensor 12 detektiert wird. Der Sensor 12 überträgt die Signale über die elektrische Leitung 14 an eine Auswerteeinheit 44, welche an einer Seitenwand 50 des Transportbehälters 46 befestigt ist. Die Befestigung kann beispielsweise mithilfe eines Klebebandes oder über eine Fixierung durch Polstermaterial erfolgen. Handelt es sich bei dem Frachtgut im Transportbehälter 46 um mehrere Batteriezellen 2, dann wird idealerweise an jeder Batteriezelle 2 ein als piezoelektrische Folie ausgebildeter Sensor 12 angebracht. Die Auswerteeinheit 44 ist dann entsprechend mehrkanalig aufgebaut.

Bei der Verarbeitung des Signals des Sensors 12 kann es erforderlich sein, dass über eine Filterung störende Signalanteile, welche aus dem Transport entstehen, eliminiert werden. Anschließend kann im einfachsten Fall eine Auswertung des Amplitudenhubs erfolgen, sodass beim Überschreiten einer definierten Grenzspannung über eine Anzeige am Transportbehälter 46 erfolgt und/oder ein akustisches Signal an die Umgebung ausgegeben wird, die etwa von Transport- oder Lagerpersonal wahrgenommen werden kann. Somit wird das Risiko für das Transport- und Lagerpersonal reduziert. Bei Unfällen des Transportfahrzeugs können die Rettungskräfte beschädigte Frachtgüter schneller den Zustand des Frachtgutes erkennen und entsprechende Gegenmaßnahmen ergreifen.

Die Energieversorgung der Auswerteeinheit 44 kann über eine handelsübliche Gerätebatterie erfolgen. Somit arbeitet das System mit dem Sensor 12 und der Auswerteeinheit 44 vollständig autark und kann das Frachtgut selbst während des Umschlags oder bei einer Zwischenlagerung überwachen.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Batteriezelle (2) mit zumindest einem Sensor (12), welcher als eine piezoelektrische Folie ausgebildet ist, **dadurch gekennzeichnet, dass** die piezoelektrische Folie eine Trägerschicht einer Elektrode (22, 24) bildet.

2. Batteriezelle (2) nach Anspruch 1, **dadurch gekennzeichnet, dass** die piezoelektrische Folie eine Dicke zwischen 10 und 100 µm aufweist.

3. Batteriezelle (2) nach einem der vorhergehenden Ansprüche, **dadurch gekennzeichnet, dass** die piezoelektrische Folie aus Polyvinylidenfluorid (PVDF) gefertigt ist.

4. Batteriezelle (2) nach einem der vorhergehenden Ansprüche, **dadurch gekennzeichnet, dass** die Batteriezelle (2) zumindest zwei als piezoelektrische Folien ausgebildete Sensoren (12) aufweist, wobei eine weitere piezoelektrische Folie oder weitere piezoelektrische Folien eine Trägerschicht einer Elektrode (22, 24) oder eine Schicht eines Separators (23) bilden.

5. Batteriezelle (2) nach Anspruch 4, **dadurch gekennzeichnet, dass** die Batteriezelle (2) zumindest eine weitere dritte piezoelektrische Folie aufweist, wobei die weitere dritte piezoelektrische Folie an einer Seitenfläche (6, 8) eines Gehäuses der Batteriezelle (2) angeordnet ist.

6. Batteriezelle (2) nach Anspruch 4, **dadurch gekennzeichnet, dass** die Batteriezelle (2) eine weitere vierte piezoelektrische Folie aufweist, wobei die weitere vierte piezoelektrische Folie an einer Berstmembran (16) eines Gehäuses (4) der Batteriezelle (2) angeordnet ist.

7. Batteriepack mit einer Batterie, die zumindest eine Batteriezelle (2) nach einem der Ansprüche 1 bis 6 aufweist, und einem Steuergerät für die Batteriezelle (2), wobei das Steuergerät eine Auswerteeinheit (44) aufweist, die an die piezoelektrische Folie gekoppelt ist.

8. Batteriepack nach Anspruch 7 mit einer Batterie, die zumindest eine weitere zweite Batteriezelle (2) aufweist, **dadurch gekennzeichnet, dass** die weitere zweite Batteriezelle (2) zumindest eine erste piezoelektrische Folie aufweist, wobei die erste piezoelektrische Folie an einer Seitenfläche (6, 8) eines Gehäuses der weiteren zweiten Batteriezelle (2) angeordnet ist.

9. Batteriepack nach Anspruch 8 mit einer Batterie, die alternativ oder zusätzlich zumindest eine weitere dritte Batteriezelle (2) aufweist, **dadurch gekennzeichnet, dass** die weitere dritte Batteriezelle (2) zumindest eine zweite piezoelektrische Folie an einer Berstmembran (16) eines Gehäuses (4) der weiteren dritten Batteriezelle (2) angeordnet ist.

10. Transportbehälter (46) mit zumindest einer Batteriezelle (2) nach einem der Ansprüche 1 bis 6 oder einem Batteriepack nach einem der Ansprüche 7 bis 9.

11. Transportbehälter (46) nach Anspruch 10, wobei der Transportbehälter (46) eine Auswerteeinheit (44) aufweist, die an die piezoelektrische Folie gekoppelt ist.

## Claims

1. Battery cell (2) comprising at least one sensor (12) which is designed as a piezoelectric film, **characterized in that** the piezoelectric film forms a carrier layer of an electrode (22, 24).

2. Battery cell (2) according to Claim 1, **characterized in that** the piezoelectric film has a thickness of between 10 and 100 µm.

3. Battery cell (2) according to either of the preceding claims, **characterized in that** the piezoelectric film is produced from polyvinylidene fluoride (PVDF).

4. Battery cell (2) according to one of the preceding claims, **characterized in that** the battery cell (2) has at least two sensors (12) which are designed as piezoelectric films, wherein a further piezoelectric film or further piezoelectric films forms/form a carrier layer of an electrode (22, 24) or a layer of a separator (23).

5. Battery cell (2) according to Claim 4, **characterized in that** the battery cell (2) has at least one further third piezoelectric film, wherein the further third piezoelectric film is arranged on a side face (6, 8) of a housing of the battery cell (2).

6. Battery cell (2) according to Claim 4, **characterized in that** the battery cell (2) has a further fourth piezoelectric film, wherein the further fourth piezoelectric film is arranged on a rupture membrane (16) of a housing (4) of the battery cell (2).

7. Battery pack comprising a battery, which has at least one battery cell (2) according to one of Claims 1 to 6, and a controller for the battery cell (2), wherein the controller has an evaluation unit (44) which is coupled to the piezoelectric film.

8. Battery pack according to Claim 7 comprising a battery which has at least one further second battery cell (2), **characterized in that** the further second battery cell (2) has at least one first piezoelectric film, wherein the first piezoelectric film is arranged on a side face (6, 8) of a housing of the further second battery cell (2).

9. Battery pack according to Claim 8 comprising a battery which, as an alternative or in addition, has at least one further third battery cell (2), **characterized in that** the further third battery cell (2) at least one second piezoelectric film is arranged on a rupture membrane (16) of a housing (4) of the further third battery cell (2).

10. Transportation container (46) comprising at least one battery cell (2) according to one of Claims 1 to 6 or a battery pack according to one of Claims 7 to 9.

11. Transportation container (46) according to Claim 10, wherein the transportation container (46) has an evaluation unit (44) which is coupled to the piezoelectric film.

## Revendications

1. Cellule de batterie (2) comprenant au moins un capteur (12), lequel est réalisé sous la forme d'un film piézoélectrique, **caractérisée en ce que** le film piézoélectrique forme une couche porteuse d'une électrode (22, 24).

2. Cellule de batterie (2) selon la revendication 1, **caractérisée en ce que** le film piézoélectrique présente une épaisseur entre 10 et 100 µm.

3. Cellule de batterie (2) selon l'une des revendications précédentes, **caractérisée en ce que** le film piézoélectrique est fabriqué en polyfluorure de vinylidène (PVDF).

4. Cellule de batterie (2) selon l'une des revendications précédentes, **caractérisée en ce que** la cellule de batterie (2) possède au moins deux capteurs (12) réalisés sous la forme de films piézoélectriques, un film piézoélectrique supplémentaire ou des films piézoélectriques supplémentaires formant une couche porteuse d'une électrode (22, 24) ou une couche d'un séparateur (23).

5. Cellule de batterie (2) selon la revendication 4, **caractérisée en ce que** la cellule de batterie (2) possède au moins un troisième film piézoélectrique supplémentaire, le troisième film piézoélectrique supplémentaire étant disposé au niveau d'une surface latérale (6, 8) d'un boîtier de la cellule de batterie (2) .

6. Cellule de batterie (2) selon la revendication 4, **caractérisée en ce que** la cellule de batterie (2) possède au moins un quatrième film piézoélectrique supplémentaire, le quatrième film piézoélectrique supplémentaire étant disposé au niveau d'une membrane d'éclatement (16) d'un boîtier (4) de la cellule de batterie (2).

7. Bloc de batterie comprenant une batterie, laquelle possède au moins une cellule de batterie (2) selon l'une des revendications 1 à 6, et un contrôleur pour la cellule de batterie (2), le contrôleur possédant une unité d'interprétation (44) qui est couplée au film piézoélectrique.

8. Bloc de batterie selon la revendication 7, comprenant une batterie, laquelle possède au moins une deuxième cellule de batterie (2) supplémentaire, **caractérisé en ce que** la deuxième cellule de batterie (2) supplémentaire possède au moins un premier film piézoélectrique, le premier film piézoélectrique étant disposé au niveau d'une surface latérale (6, 8) d'un boîtier de la deuxième cellule de batterie (2) supplémentaire.

9. Bloc de batterie selon la revendication 8, comprenant une batterie, laquelle possède au moins en variante ou en plus une troisième cellule de batterie (2) supplémentaire, **caractérisé en ce que** la troisième cellule de batterie (2) supplémentaire au moins un deuxième film piézoélectrique est disposé au niveau d'une membrane d'éclatement (16) d'un boîtier (4) de la troisième cellule de batterie (2) supplémentaire.

10. Récipient de transport (46) comprenant au moins une cellule de batterie (2) selon l'une des revendications 1 à 6 ou un bloc de batterie selon l'une des revendications 7 à 9.

11. Récipient de transport (46) selon la revendication 10, le récipient de transport (46) possédant une unité d'interprétation (44) qui est couplée au film piézoélectrique.
